# EUROPÄISCHE PATENTANMELDUNG

(11) **EP 2 897 238 A1**
(43) Veröffentlichungstag der Anmeldung: **22.07.2015**
(21) Anmeldenummer: 14305058.1
(22) Anmeldetag: 16.01.2014
(51) Int. Cl.: H01R 35/02, H01R 13/68, B60R 16/027

(54) **Kassette zur elektrischen Kontaktierung eines verstellbaren Verbrauchers**

(71) Anmelder: Nexans, 75008 Paris (FR)
(72) Erfinder: Huscher, Rainer, 95679 Waldershof (DE); Steinert, Alexander, 92685 Floß (DE)
(74) Vertreter: Döring, Roger

(57) **Zusammenfassung**

Die Erfindung betrifft eine Kassette zur elektrischen Kontaktierung eines verstellbaren Verbrauchers mit einer Spannungsquelle,
wobei die Kassette eine mit dem Verbraucher kontaktierte bewegliche erste Endstelle (8), eine stationäre zweite Endstelle (10) und eine die erste Endstelle (8) und die zweite Endstelle (10) verbindende Flachleiter-Bandleitung (5) mit mindestens einem Flachleiter (15, 16) aufweist,
wobei die erste Endstelle (8) gegenüber der zweiten Endstelle (10) drehbar ist.

Hierbei ist vorgesehen, dass in der Kassette eine elektrische Überlastsicherung (18) für zumindest einen Flachleiter (15) vorgesehen ist, die an oder zwischen der ersten Endstelle (8) und der zweiten Endstelle (10) vorgesehen ist, vorzugsweise in der Flachleiter-Bandleitung (5) als Querschnittverengung (21) des mindestens einen Flachleiters (15).

## Beschreibung

Die Erfindung betrifft eine Kassette zur elektrischen Kontaktierung eines verstellbaren Verbrauchers an eine Spannungsquelle und ist insbesondere in einem Lenkrad eines Fahrzeugs einsetzbar.

Eine derartige Vorrichtung ist z. B. aus der EP 1 255 330 B1 sowie der EP 1 324 435 B1 bekannt. In einem Lenkrad eines Fahrzeugs vorgesehene elektrische Verbraucher sind mit stationären Spannungsquellen bzw. einer stationären Stromversorgung zu kontaktieren. Hierzu wird eine stationäre Endstelle mit einer beweglichen Endstelle kontaktiert, wobei die Kontaktierung eine Drehung des Lenkrades, z. B. um sechs ganze Drehungen, zu ermöglichen hat. Da Schleifkontakte oder Schleifringe einem Verschleiß unterworfen und problematisch sind, ist der Einsatz von gewickelten Flachleiter-Bandleitungen bekannt.

Bei derartigen Kassetten ist die Flachleiter-Bandleitung als Spirale oder mit zwei gegenläufigen, konzentrischen Wicklungsbereichen und einer Umkehrstelle ausgebildet, um die mehreren Drehungen der drehbaren Endstelle gegenüber der stationären Endstelle ausgleichen zu können.

Bei einigen Anwendungen sind im Lenkrad Leistungsströme erforderlich. Insbesondere eine Lenkradheizung erfordert höhere Ströme. Um Gefahren, insbesondere bei Kurzschlüssen, vorzubeugen, sind entsprechende Leistungskreise im Allgemeinen durch Sicherungen, im Allgemeinen Überlastsicherungen gesichert. Die Sicherungen sind im Allgemeinen in Sicherungshaltern oder Sicherungsaufnahmen aufgenommen; der Kontaktierungs- und Kostenaufwand ist hierdurch entsprechend erhöht.

Der Erfindung liegt die Aufgabe zugrunde, eine Kassette zur elektrischen Kontaktierung eines verstellbaren Verbrauchers zu schaffen, die eine sichere Stromversorgung und einen sicheren Schutz vor Überlast bei relativ geringem Aufwand ermöglicht.

Diese Aufgabe wird durch eine Kassette nach Anspruch 1 gelöst. Die Unteransprüche beschreiben bevorzugte Weiterbildungen.

Erfindungsgemäß ist somit die Überlastsicherung nicht außerhalb der Kassette, sondern in der Kassette vorgesehen.

Gemäß einer ersten, bevorzugten Ausbildung ist die Überlastsicherung in der Flachleiter-Bandleitung selbst ausgebildet, indem mindestens einer der Leiter, vorzugsweise der spannungsführende Leiter, mit einer Querschnittsverengung ausgebildet ist. Die Querschnittsverengung kann insbesondere durch eine Ausnehmung in dem Flachleiter (Bandleiter), vorzugsweise durch einen reduzierten Querschnittsbereich, insbesondere einen Steg ausgebildet werden.

Durch diese Maßnahme wird auf überraschend einfache Weise die vollständige Funktionalität einer Überlastsicherung bei sehr geringem Hardware-Aufwand gewährleistet. Dem liegt die Erkenntnis zugrunde, dass eine Überlastsicherung im Allgemeinen als Durchbrenn-Sicherung mit dem Verbraucher in Reihe geschaltet wird und somit letztlich einen Leitungsbereich mit vermindertem Querschnitt darstellt.

Hierbei sind Überlastsicherungen im Allgemeinen mit genau definierten elektrischen Eigenschaften wie Grenzstrom und Verlust-Leistung auszubilden, um FehlFunktionen zu vermeiden. Erfindungsgemäß wird erkannt, dass eine Flachleiter-Bandleitung durch den mindestens einen Flachleiter - anders als eine Leitung mit Kabeln - auf überraschend einfache Weise bereits selbst die Konstruktion bzw. Ausbildung einer Überlastsicherung mit genauen Eigenschaften ermöglicht, da in der flächigen Ausbildung mit relativ geringen Aufwand eine Geometrie ausbildbar ist, bei der der Flachleiter geeignet zugeschnitten wird.

Somit ermöglicht ein Flachbandleiter durch die großflächige Ausbildung mit relativ geringem Aufwand eine genaue Spezifizierung seiner Leitungs-Geometrie, ohne das für die Schnittführung zur Ausbildung der Geometrie eine allzu hohe Genauigkeit erforderlich ist. Die Querschnittsverengung kann sich über einen definierten Bereich erstrecken. Die Breite des querschnittsreduzierten Bereichs und seine Länge und hiermit auch die thermische Ankopplung können somit mit relativ geringem Aufwand sehr genau festgelegt werden.

So kann als querschnittsreduzierter Bereich ein Steg zwischen zwei Ausnehmungen ausgebildet werden; der hierdurch bewirkte elektrische Widerstand und die Verlustleistung, die bei Überschreiten eines Grenzstroms, d. h. in einem Überlast-Fall zu einem Durchbrennen bzw. Aufschmelzen des Stegs führen, können hierbei genau berechnet werden. Durch die Ausnehmungen ist hierbei auch die thermische Ankopplung des Stegs genau definiert, um das Durchschmelzen oder Durchbrennen im Überlast-Fall genau spezifizieren zu können. Der Leiter kann insbesondere in einem Trägermaterial aufgenommen sein, z. B. in einem Kunststoff oder Kunstharz, das eine geringe thermische Leitfähigkeit aufweist.

Weiterhin wird hierbei auch erkannt, dass eine spiralgewickelte Flachleiter-Bandleitung zwar erheblichen mechanischen Bewegungen ausgesetzt ist; diese Bewegungen führen jedoch im Allgemeinen nur zu einem Aufwickeln und Abwickeln der Flachleiter-Bandleitung, d. h. zu einer Bewegung oder Verformung senkrecht zur Flachleiter-Ebene, ohne zu einer relevanten Beanspruchung des querschnittsreduzierten Bereichs zu führen, der in dem Trägermaterial auch fest aufgenommen werden kann. Der querschnittsreduzierte Bereich der Flachleiter Bandleitung kann zudem auch in einem mechanisch beruhigten Bereich der Kassette liegen.

Somit wird gemäß dieser Ausführungsform auf überraschende Weise eine genau spezifizierte Ausbildung in der Überlastsicherung in der Flachleiter-Bandleitung ermöglicht.

Im Überlastfall, bei dem der querschnittsreduzierte Bereich somit durchschmilzt oder durchbrennt, sind auch Fehl-Kontaktierungen des freien Endes ausgeschlossen, da der spannungsführende Leiter in dem Kunststoff-Material aufgenommen ist.

Gemäß einer weiteren Ausführungsform kann die Überlastsicherung auch als Aufsteck-Teil oder Einsetz-Teil in eine der Endstellen oder auf eine der Endstellen gesteckt oder gesetzt werden. Somit ist auch bei dieser Ausführungsform die zusätzliche Anbringung einer Sicherungsaufnahme bzw. eines Sicherungshalters nicht erforderlich.

Die Erfindung wird im Folgenden anhand der beiliegenden Zeichnungen an einigen Ausführungsformen erläutert. Es zeigen:
- Fig. 1: eine Aufsicht auf eine geöffnete Airbagkassette gemäß einer Ausführungsform der Erfindung;
- Fig. 2: eine zu Figur 1 alternative Ausbildung einer Airbagkassette;
- Fig. 3: einen Verbindungsbereich zwischen einer Flachleiter-Bandleitung und einem elektrischen Verbindungselement mit Ausbildung der Sicherung gemäß einer Ausführungsform;
- Fig. 4: eine zu Figur 3 alternative Ausbildung der Sicherung gemäß einer Ausführungsform der Erfindung.

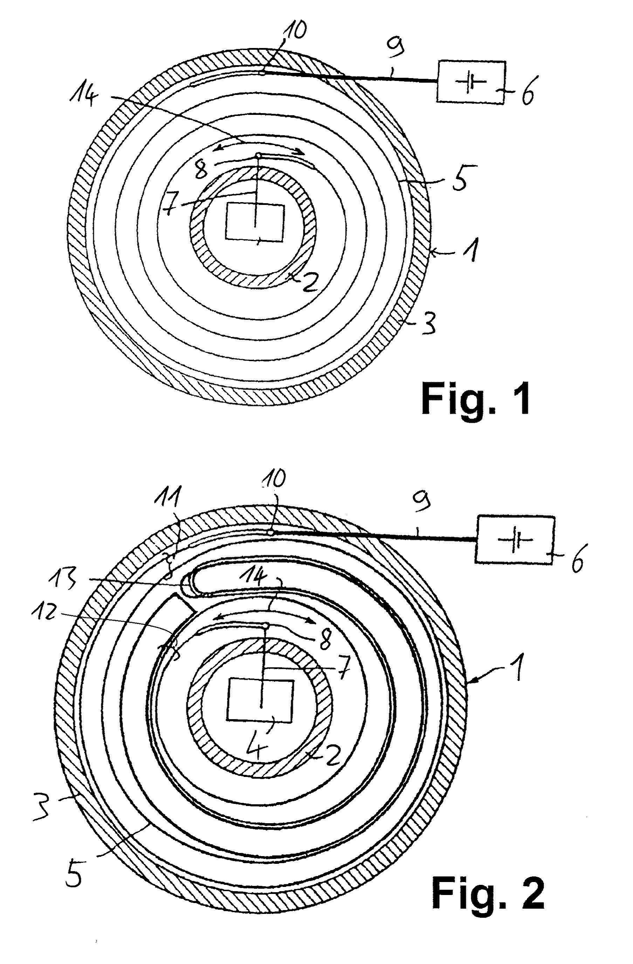

Fig. 1 zeigt eine Kassette 1, die eine zylindrische bzw. ringförmige innere Wandung 2 und eine hierzu konzentrische ringförmige bzw. zylindrische äußere Wandung 3 aufweist. Ein Verbraucher 4 ist über eine Flachleiter- Bandleitung 5 an eine Spannungsquelle 6 angeschlossen. Die Wandung 2 ist zum Beispiel Teil eines drehbaren Kassettenteils, das gegenüber einem stationären Kassettenteil drehbar ist; die gezeigte Kassette 1 kann insbesondere zur Kontaktierung des Verbrauchers 4 in einem Lenkrad dienen, wozu das drehbare Kassettenteil zum Beispiel sechs Drehungen gegenüber dem stationären Kassettenteil zulässt.

Der Verbraucher 4 kann über eine elektrische Leitung 7 an eine drehbare erste Endstelle 8 angeschlossen werden; weiterhin kann die Spannungsquelle 6 über eine elektrische Leitung 9 an eine stationäre zweite Endstelle 10 angeschlossen werden. Die erste Endstelle 8 ist somit gegenüber der zweiten Endstelle 10 drehbar. Die Leitungen 7 und 9 sind ein- oder mehradrig; entsprechend weisen die Endstellen 8 und 10 jeweils ein oder mehrere Kontakte bzw. Pole auf. Die Kontaktierung der Endstellen 8 und 10 erfolgt über eine ein- oder mehradrige Flachleiter-Bandleitung 5, die bei Drehung der drehbaren ersten Endstelle 8 gegenüber der stationären Endstelle 10 in ihrer Spiralform entweder aufgewickelt wird, unter Verringerung der Durchmesser ihrer Wicklungen, oder abgewickelt wird unter Vergrößerung des Durchmessers ihrer Wicklungen und unter Verringerung der Anzahl ihrer Wicklungen.

Fig. 2 zeigt eine gegenüber Fig. 1 abgewandelte Ausführungsform, bei der die Flachleiter-Bandleitung 5 nicht als Spirale entwickelt ist, sondern mit einem äußeren Wicklungsbereich 11 und einem innerem Wicklungsbereich 12, die zueinander entgegengesetzte Wicklungsrichtungen aufweisen, indem eine Umkehrstelle 13 die Richtung der Wicklung umdreht.

Sowohl die Ausführungsform nach Fig. 1 als auch die Ausführungsform nach Fig. 2 werden erfindungsgemäß erfasst. In beiden Fällen können auch mehrere Flachleiterbandleitungen pro Kassette zum Einsatz kommen.

Der Verbraucher 4 mit der ersten, drehbaren Endstelle 8 kann somit jeweils entsprechend dem Doppelpfeil 14 gedreht oder geschwenkt werden, ohne Beeinträchtigung der elektrischen Leistung oder Verringerung der Übertragungseigenschaften.

An den Verbraucher 4 kann z.B. eine Lenkradheizung angeschlossen sein, so dass hier Leistungsströme oder Steuerstöme über die ein- oder mehradrige Flachleiter-Bandleitung 5 übertragen werden können. In der Leitung, d. h. den elektrischen Leitungen 7 und 9 sowie der Flachleiter-Bandleitung 5, sind zwei oder mehr Leiter auf genommen, von denen im Allgemeinen die Spannungsführenden mit dem Pluspol der Spannungsquelle 6 verbunden sind und andere Leiter geerdet und mit dem Minuspol versehen sind. Zusätzlich können noch weitere Flachleiter-Bandleitungen entsprechend der Flachleiter-Bandleitung 5 im Lenkrad-Bereich vorgesehen sein, um weitere elektrische Verbraucher zu kontaktieren.

Aus Sicherheitsgründen ist eine elektrische Sicherung als Überlastschutz vorgesehen.

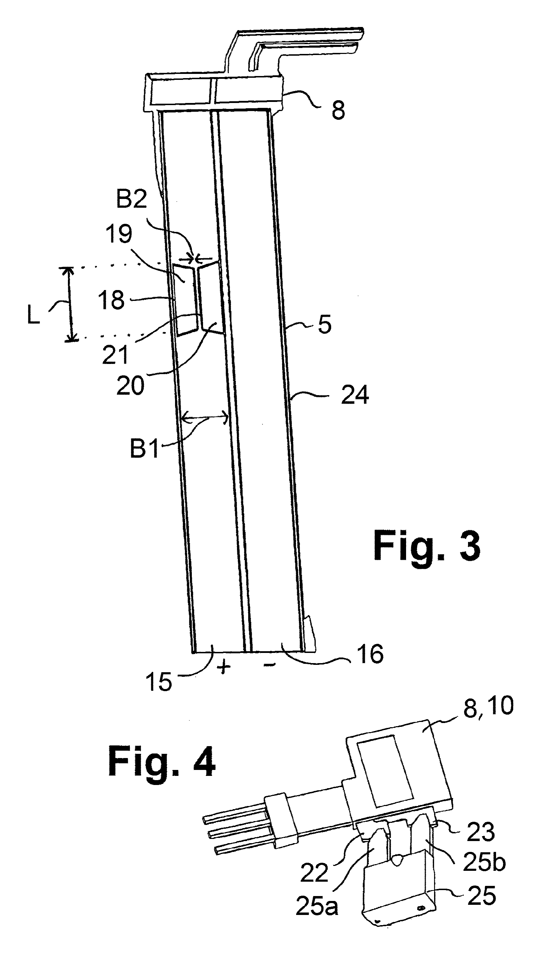

Fig. 3 zeigt die Ausbildung einer zwei-adrigen Flachleiter-Bandleitung 5 mit dem spannungsführenden Flachleiter 15 und dem geerdeten Flachleiter 16. Gemäß dieser Ausführungsform ist eine Überlastsicherung 18 in dem spannungsführenden Flachleiter 15 als Querschnittsverengung ausgebildet. Hierzu sind in der gezeigten Ausführungsform in dem spannungsführenden Flachleiter 15 zwei Aussparungen 19, 20 ausgebildet, zwischen denen ein Steg 21 verbleibt, der bei hoher Stromdichte schmilzt und somit die Funktion einer Überlastsicherung bzw. Schmelzsicherung erfüllt. Hierzu ist der Steg 21 mit definierter Länge L und einer gegenüber einer ersten Breite B1 des spannungsführenden Flachleiters 15 reduzierten, definierten zweiten Breite B2 ausgebildet, die durch die Aussparungen 19, 20 festgelegt sind. Da die Überlastsicherung 18 im spannungsführenden Leiter 15 vorgesehen ist, können Kurzschlüsse im Bereich des Verbrauchers 4 oder der Kontaktierung des Verbrauchers 4, z. B. Kurzschlüsse gegenüber einem geerdeten Teil, durch die Überlastsicherung 18 zeitlich begrenzt werden, bis die Überlastsicherung 18 durchbrennt. Grundsätzlich kann ergänzend eine weitere Sicherung auch im zweiten, geerdeten Leiter 16 vorgesehen sein.

Beide Flachleiter 15 und 16 sind vorzugsweise jeweils als eine durchgängige Leitungsschicht ausgebildet, so dass die Querschnittsverengung in der Leitungsschicht des spannungsführenden Leiters 15 ausgebildet ist.

Die Flachleiter 15 und 16 können auch als einadrige Leiter in jeweils einer einzelnen Flachleiter Bandleitung ausgebildet sein, des weiteren können sich die Flachleiter 15 und 16 auch in mehradrigen Flachleiter Bandleitungen befinden.

Gemäß Fig. 3 ist die Überlastsicherung 18 nahe an der beweglichen ersten Endstelle 8 vorgesehen; sie kann jedoch auch nahe der stationären zweiten Endstelle 10 oder auch in einem mittleren Bereich zwischen den Endstellen 8 und 10 vorgesehen sein.

Gemäß der Ausführungsform der Fig. 4 ist die Überlastsicherung nicht in der Flachleiter-Bandleitung 5 ausgebildet, sondern es ist eine Überlastsicherung 25 an einer der beiden Endstellen 8, 10 vorgesehen; die Überlastsicherung 25 ist z. B. mit ihren Kontakten 25a, 25b in entsprechende Aufnahmen 22, 23 der Endstelle 8 oder 10 gesteckt oder auf eine andere Art und Weise kontaktiert und somit wiederum mit z. B. dem spannungsführenden Leiter 15 in Reihe geschaltet. Somit ist auch bei dieser Ausführungsform die Überlastsicherung 20 in der Kassette 1 vorgesehen.

Die Ausführungsformen der Fig. 3 und 4 können grundsätzlich kombiniert werden.

### Bezugszeichenliste

- 1: Kassette
- 2: innere Wandung
- 3: äußere Wandung
- 4: Verbraucher
- 5: Flachleiter- Bandleitung
- 6: Spannungsquelle
- 7: elektrische Leitung
- 8: drehbare erste Endstelle
- 9: elektrische Leitung
- 10: stationäre zweite Endstelle
- 11: äußerer Wicklungsbereich
- 12: innerer Wicklungsbereich
- 13: Umkehrstelle
- 14: Doppelpfeil
- 15: spannungsführender Flachleiter
- 16: geerdeter Flachleiter
- 18: Überlastsicherung
- 19, 20: Aussparungen
- 20a, 20b: Kontakte der Überlastsicherung 18
- 21: Steg (querschnittsreduzierter Bereich)
- 22,23: Aufnahmen
- 25: Überlastsicherung
- 25a, 25b: Kontakte der Überlastsicherung 25

- B1: erste Breite des spannungsführenden Flachleiters 15
- B2: zweite Breite des Stegs 21
- L: Länge des Stegs 21

## Patentansprüche

1. Kassette (1) zur elektrischen Kontaktierung eines verstellbaren Verbrauchers (4) mit einer Spannungsquelle (6),
wobei die Kassette (1) eine mit dem Verbraucher (4) kontaktierte bewegliche erste Endstelle (8), eine stationäre zweite Endstelle (10) und eine die erste Endstelle (8) und die zweite Endstelle (10) verbindende Flachleiter-Bandleitung (5) mit mindestens einem Flachleiter (15, 16) aufweist,
wobei die erste Endstelle (8) gegenüber der zweiten Endstelle (10) drehbar ist, **dadurch gekennzeichnet, dass**
in der Kassette (1) eine elektrische Überlastsicherung (18, 25) für zumindest einen Flachleiter (15) vorgesehen ist, die an oder zwischen der ersten Endstelle (8) und der zweiten Endstelle (10) vorgesehen ist.

2. Kassette (1) nach Anspruch 1, **dadurch gekennzeichnet, dass** die Überlastsicherung (18) in der Flachleiter-Bandleitung (5) ausgebildet ist als Querschnittverengung an mindestens einem Flachleiter (15).

3. Kassette (1) nach Anspruch 2, **dadurch gekennzeichnet, dass** die Überlastsicherung (18) in einem spannungsführenden Flachleiter (15) ausgebildet ist, indem in oder an dem mit einer ersten Breite (B1) ausgebildeten spannungsführenden Flachleiter (15) mindestens eine Ausnehmung (19, 20) und ein durch die Ausnehmung (19, 20) querschnittsreduzierter Bereich (21) ausgebildet sind.

4. Kassette (1) nach Anspruch 3, **dadurch gekennzeichnet, dass** in dem spannungsführenden Flachleiter (15) zwei Ausnehmungen (19, 20) ausgebildet sind, zwischen denen der Steg (21) mit einer gegenüber der ersten Breite (B1) reduzierten zweiten Breite (B2) und definierter Länge (L) ausgebildet ist.

5. Kassette (1) nach Anspruch 3 oder 4, **dadurch gekennzeichnet, dass** der querschnittsreduzierter Bereich (21) und mindestens ein mit der ersten Breite (B1) ausgebildeter Bereich des spannungsführenden Flachleiters (15) als eine durchgängige Leitungsschicht ausgebildet sind.

6. Kassette (1) nach Anspruch 1, **dadurch gekennzeichnet, dass** die Überlastsicherung (25) an mindestens einer der beiden Endstellen (8, 10) kontaktiert ist.

7. Kassette (1) nach Anspruch 6, **dadurch gekennzeichnet, dass** die Überlastsicherung (25) aufgesteckt ist.

8. Kassette (1) nach einem der vorherigen Ansprüche, **dadurch gekennzeichnet, dass** sie zur Übertragung eines Leistungsstroms für ein Lenksystem eines Fahrzeugs vorgesehen ist.

9. Kassette (1) nach einem der vorherigen Ansprüche, **dadurch gekennzeichnet, dass** die Flachleiter-Bandleitung (5) mit mehr als einem Flachleiter (15, 16) ausgebildet ist.

10. Kassette (1) nach Anspruch 9, **dadurch gekennzeichnet, dass** die Flachleiter-Bandleitung (5) genau zwei Flachleiter (15, 16) zur Ausbildung eines Stromkreises aufweist.

11. Kassette (1) nach einem der vorherigen Ansprüche , **dadurch gekennzeichnet, dass** sie als Airbag-Kassette (1) ausgebildet ist und weitere Flachleiter-Bandleitungen für weitere Funktionen aufweist.
